Europäisches Patentamt

European Patent Office

Office européen des brevets

(11) Publication number: **0 029 336**
**A1**

# (12) EUROPEAN PATENT APPLICATION

(21) Application number: **80304035.1**

(22) Date of filing: **12.11.80**

(51) Int. Cl.³: **G 01 F 1/06,** G 01 F 1/075

(30) Priority: 15.11.79 GB 7939624
21.03.80 GB 8009721

(43) Date of publication of application: **27.05.81**
**Bulletin 81/21**

(84) Designated Contracting States: **BE DE FR GB IT NL**

(71) Applicant: **Britax Vega Limited, Berry Hill Industrial Estate George Baylis Road, Droitwich Worcestershire WR9 9AZ (GB)**

(72) Inventor: **Mack, John Edward, 12 Naseby Road, Solihull West Midlands (GB)**
Inventor: **Canning, Bernard, 3 Queensway Streetly, Sutton Coldfield West Midlands (GB)**

(74) Representative: **Hollinghurst, Antony, BRITAX CENTRAL RESEARCH & DEVELOPMENT Kingsbury Road Curdworth, Sutton Coldfield West Midlands B76 9EQ (GB)**

(54) **Improvements in or relating to flowmeters.**

(57) A flowmeter, particularly for measuring pulsating fluid flow, comprises a cylindrical chamber 10 having a Savonius rotor 12, mounted therein for rotation about the axis thereof. An inlet port 14 is arranged to induce a vortex in the chamber and four stator vanes, 36, 37, 38 and 39 are arranged to provide a braking effect on the rotor 12 to prevent overrun. Rotation of the rotor 12, which is made of a non-magnetic, electrically conductive material, is sensed by coils 30 and 32.

ACTORUM AG

- 1 -

## Improvements in or relating to Flowmeters

This invention relates to flowmeters of the type comprising
a cylindrical chamber having a rotor vane mounted therein for rotation
about the axis thereof, an inlet port for inducing a vortex in said
chamber so as to cause rotation of the rotor vane and sensing means
for detecting rotation of the rotor vane.

British Patent Specification No. 529615 discloses a flowmeter
of the foregoing type. However, such flowmeters tend to be inaccurate
when measuring a pulsating flow or if the flow stops suddenly because
the rotor has a tendency to overrun and thus give a high reading. It
is an object of the invention to provide a flowmeter which is not
subject to this disadvantage.

According to the invention, a flowmeter comprises a cylindrical
chamber having a rotor vane mounted therein for rotation about the axis
thereof, an inlet port for inducing a vortex in said chamber so as to
cause rotation of the rotor vane, an outlet port and sensing means
for detecting rotation of the rotor vane, one end wall of the cylindrical
chamber being provided with at least one stator vane.

An embodiment of the invention will now be described by
way of example, with reference to the accompanying drawings, in
which:

Figure 1 is a transverse cross-sectional view of a
flowmeter in accordance with the invention,

Figure 2 is a cross-sectional view taken on the line
2 - 2 in Figure 1 and showing the line 1 - 1 on which the cross-
section of Figure 1 is taken,

0029336

        Figure 3 is a cross-sectional view taken on the line
3 - 3 in Figure 1,

        Figure 4 is a diagram of an electrical circuit for
use with the flowmeter shown in Figures 1 to 3, and

        Figure 5 is a diagram of an alternative electrical
circuit for use with a flowmeter having a coil with a single
winding.

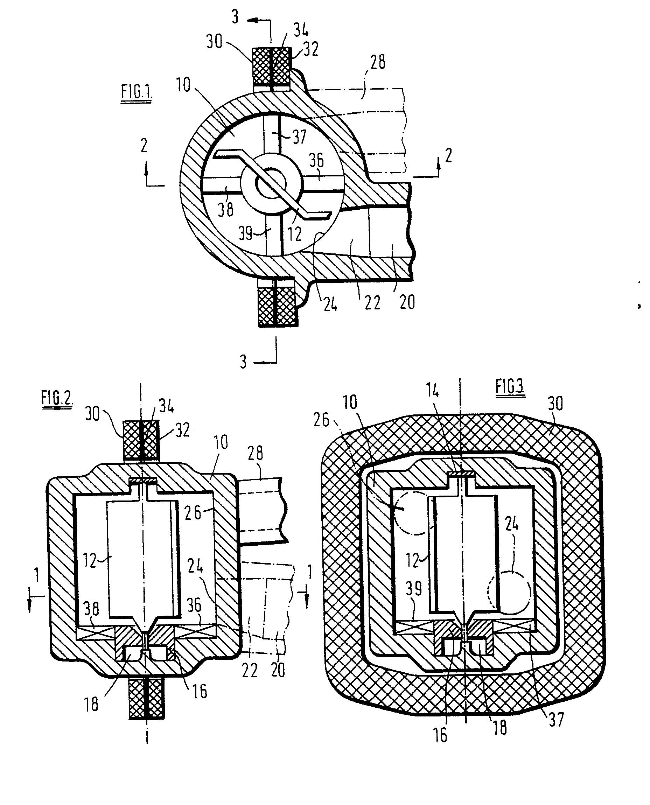

        Referring to Figures 1 to 3, a flowmeter comprises a
cylindrical chamber 10 having a Savonius rotor 12 mounted in
bearings 14 and 16 for rotation about the axis of the chamber
10.  The lower bearing 16 is a very loose fit and communicates
with a sediment well 18.  The effect of this is that, if any
particles of sediment escape the various filters through which
the incoming fluid passes and settle on the upper surface of the
bearing 16, such particles drop through into the sediment well 18
rather than increasing the friction at the bearing.  An inlet
tube 20 is connected, via a tapering nozzle 22 to a port 24 in the
cylindrical wall of the chamber 10.  The port 24 is disposed near
the bottom of the chamber 10, as viewed in Figure 2, and oriented
so as to direct the fluid flow in an upwardly spiralling helical
path towards an outlet port 26 which is connected to a correspondingly
oriented outlet pipe 28.  The foregoing orientation of the pipes 20
and 28 not only has the advantage of assisting in the production
of the required helical flow within the chamber 10, but also allows
the free ends of the pipes 20 and 28 to diverge, enabling the ports
24 and 26 to be disposed in closer proximity to one another than
would otherwise be possible.

        A coil comprising two axially spaced windings 30 and
32 separated by an electrically conductive screen 34, is mounted
surrounding the chamber 10 with the axis thereof in the plane of
the screen 34 and perpendicular to the axis of the coil.  Thus,
when the rotor vane 12 is oriented in the plane of the screen 34,
it acts as a single-shorted-turn secondary while, when it is out
of the plane of the screen 34, it has a reduced effect on the
windings 30 and 32.

Four stator vanes 36, 37, 38 and 39 are located at the lower end of the cylindrical chamber 10. These stator vanes 36, 37, 38 and 39 have a braking effect on the rotor 12. This reduces any tendency of the meter to read high when measuring pulsating flow, due to the rotor 12 continuing to rotate during the intervals between pulses. It also reduces the possibility of the rotor overrunning if fluid flow stops suddenly.

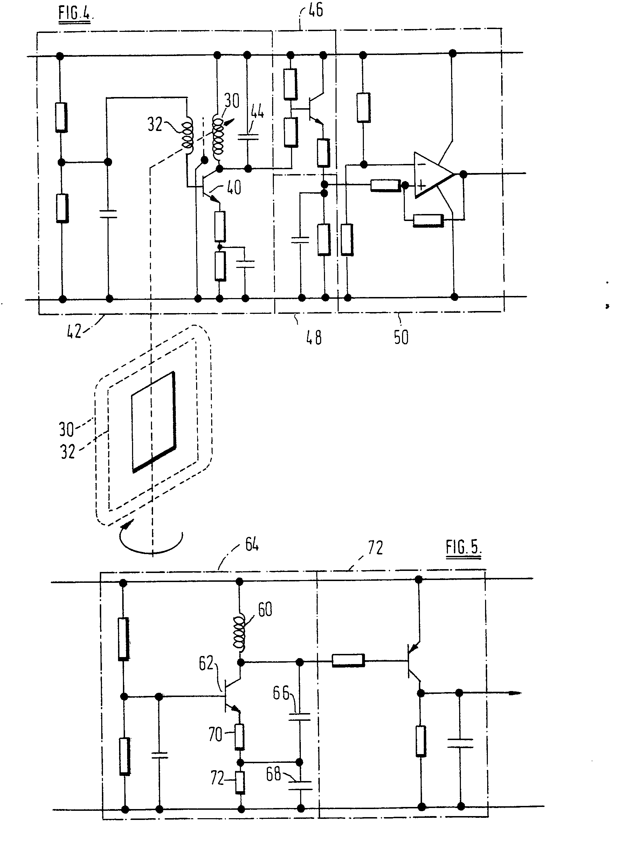

Turning now to Figure 4, the winding 30 is connected to the collector circuit and the winding 32 in the base circuit of a transistor 40 forming part of an oscillator 42. A capacitor 44, connected in parallel with the winding 30 determines the frequency at which the oscillator 42 operates, the remainder of the circuit thereof providing the required bias levels. The output of the oscillator 42 is connected, via an emitter follower circuit 46 to a capacitor-resistor integrator 48 having a time-constant significantly longer than the period of the oscillator 42 but significantly shorter than the maximum period of rotation of the rotor vane 12 when the flowmeter is in use. The output of the integrator 48 is connected to a feedback comparator 50.

In use, as fluid flows from the inlet port 22 to the outlet port 24, the vane 12 rotates at a rate dependent on the volume rate of the fluid flow. The oscillator has two periods of alternate operation and non-operation for each revolution of the vane 12 as the rotor moves from a position in which it acts as a shorted secondary to a position in which its effect on the windings 30 and 32 is minimal. For each such period of operation, the comparator 50 produces an output pulse. The output of the comparator 50 may be connected to a counter (not shown) or other data processing or recording equipment as required.

Alternatively, instead of the outlet port 24, an outlet port may be provided in the end wall 52 of the chamber 10, Although this complicates the design of the bearing 14, it may be advantageous in some circumstances.

The use of a Savonius rotor is not essential although it has been found to give better starting than a flat vane. The rotor may also have more than two blades, in which case a greater number of output pulses per revolution is produced by the comparator 50.

The screen 34 between the windings 30 and 32 reduces the effect of other metal components in the vicinity of the flowmeter. It may be omitted if the flowmeter is to be used in a location remote from other metal parts or where it is totally screened from such other metal parts.

Figure 5 illustrates an alternative electrical circuit for use with a flowmeter in which the sensing coil has a single winding in place of the two windings 30 and 32. This single winding 60 is connected to the collector circuit of a transistor 62 forming part of an oscillator 64. The operating frequency of the oscillator 64 is determined by the coil 60 and two capacitors 66 and 68 connected in series, the necessary feedback being provided by a link between the interconnection between the capacitors 66 and 68 and two serially connected resistors 70 and 72 forming the emitter circuit of the transistor 62. The output of the oscillator 64 is connected to a detector circuit 72 which operates in the same manner as the detector formed by the circuits 46 and 48 of Figure 4. The output of the detector 72 may be connected to a comparator (not shown) similar to the comparator 50 of Figure 4.

With either of the circuits shown in Figures 4 and 5, the coupling between the rotor vane 12 and the windings 30 and 32 or the winding 60, may be such that the oscillators 42 and 64 have alternate periods of operation and non-operation, as already described. Alternatively, rotation of the vane 12 may be arranged to merely amplitude modulate the output of the oscillator in each case.

The entire flowmeter is preferably housed in a metal enclosure which both serves as a magnetic screen and protects the meter from mechanical damage. If the cylindrical chamber itself is moulded in plastics material, the metal enclosure will also serve to contain the fluid should the flowmeter be subjected to a sufficiently high temperature to melt the plastics material, for example in a fire.

- 5 -

0029336

1.    A flowmeter comprising a cylindrical chamber having a
rotor vane mounted therein for rotation about the axis thereof,
an inlet port for inducing a vortex in said chamber so as to
cause rotation of the rotor vane, an outlet port and sensing
means for detecting rotation of the rotor vane, one end wall
of the cylindrical chamber being provided with at least one
stator vane.

2.    A flowmeter according to claim 1, wherein the axis of
rotation of the rotor vane is vertical and the stator vane is
formed on the bottom end of the chamber.

3.    A flowmeter according to claim 1 or 2, wherein the
rotor is a Savonius rotor having a single vane with a diametrically
extending acentral region.

4.    A flowmeter according to claim 1, 2 or 3, wherein the
stator comprises a plurality of radially extending vanes,

5.    A flowmeter according to claim 4, wherein the stator
comprises four mutually orthogonal vanes.

6.    A flowmeter according to any preceeding claim, wherein
the rotor is made of an electrically conductive non-magnetic
material and the sensing means comprises a coil surrounding the
chamber with its axis oriented so that its impedance varies with
the angular position of the rotor vane.

7.    A flowmeter substantially as hereinbefore described
with reference to the accompanying drawings.

FIG.1.

FIG.2.

FIG.3

FIG.4.

FIG.5.

| | European Patent Office | **EUROPEAN SEARCH REPORT** | 0029336 Application number |
| | | | EP 80 30 4035 |

## DOCUMENTS CONSIDERED TO BE RELEVANT

| Category | Citation of document with indication, where appropriate, of relevant passages | Relevant to claim |
|---|---|---|
| X | <u>CH - A - 461 826</u> (BOPP & REUTHER GmbH) <br> * Page 1, column 2, lines 4-8; figures 1-2; claims * <br><br> -- | 1,2 |
| X | <u>CH - A - 408 437</u> (PRESNA MECHANIKA NARODNY PODNIK) <br> * Claims; figures 1-3 * <br><br> -- | 1,2 |
| | <u>GB - A - 173 949</u> (W.G. KENT) <br> * Figure 2 * <br><br> -- | 3,4 |
| | <u>US - A - 2 018 361</u> (R.O. HENSZEY) <br> * Figure 3 * <br><br> -- | 3 |
| | <u>GB - A - 1 153 423</u> (THE BRITISH OXYGEN COMP. LTD.) <br> * Figure 2 * <br><br> -- | 3 |
| | <u>DE - A - 2 616 323</u> (K. KUPPERS) <br> * Figures 1-2; page 4, lines 7-24; page 7, line 4 - page 8, line 6 * <br><br> ---- | 4-6 |

**CLASSIFICATION OF THE APPLICATION (Int. Cl.³)**

G 01 F 1/06
G 01 F 1/075

**TECHNICAL FIELDS SEARCHED (Int. Cl.³)**

G 01 F 1/06
1/075
1/08

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search <br> The Hague | Date of completion of the search <br> 17-02-1981 | Examiner <br> NUYTEN |

EPO Form 1503.1   06.78